# EUROPEAN PATENT SPECIFICATION

(11) **EP 3 668 695 B1**
(45) Date of publication and mention of the grant of the patent: **22.02.2023**
(21) Application number: 18815826.5
(22) Date of filing: 14.08.2018
(51) Int. Cl.: B29C 48/09, B29C 48/02, B29C 48/18, B32B 1/08, B29K 27/06, B29K 105/26, B32B 5/18, B32B 7/02, B32B 27/18, B32B 27/20, B32B 27/30

(54) **MULTILAYER PVC PIPE WITH A MICRONIZED RECYCLED PVC LAYER**
MEHRSCHICHTIGES PVC-ROHR MIT EINER MIKRONISIERTEN RECYCELTEN PVC-SCHICHT
TUYAU EN PVC MULTICOUCHE AVEC UNE COUCHE DE PVC RECYCLÉ

(30) Priority: 17.08.2017 RO 201700576
(43) Date of publication of application: 24.06.2020
(73) Proprietor: Petri Zosin, Sergiu, Jud. Bistrita Nasaud 420114 (RO)
(72) Inventor: Petri Zosin, Sergiu, Jud. Bistrita Nasaud 420114 (RO)
(86) International application number: PCT/RO2018/000015
(87) International publication number: WO 2019/035728

(56) References cited:
- JP-A- 2002 283 436
- JP-A- 2010 274 577
- KR-A- 20170 052 263
- KR-B1- 101 381 310
- PETRI ZOSIN SERGIU ET AL: "Comparative studies regarding the use of recycled PVC in finite products", STUDIA UNIVERSITATIS BABES-BOLYAI AMBIENTUM, [Online] vol. 62, no. 2, 30 November 2017 (2017-11-30), pages 45-52, XP055869880, ISSN: 1843-3855, DOI: 10.24193/subbambientum.2017.2.05 Retrieved from the Internet: URL:http://dx.doi.org/10.24193/subbambient um.2017.2.05>

## Description

### Technical Field

The invention relates to micronized recycled PVC (polyvinyl chloride) multilayer pipes which are formed of three layers, two of which are densely compact, one being placed inside and the other at the external side of the pipe, and between them being placed a middle layer with smaller density, being expanded and having a micronized recycled PVC composition, these pipes being used in the sewer system both inside and outside buildings, the invention also relates to the process of obtaining these pipes by the extrusion process (the manufacturing line is provided with an extruder and one or two co-extruders), using fabrication recipes with different compositions for the compact layer and for the expanded layer.

### Background Art

It is known that in the technical art we find different products, compositions and procedures for obtaining multilayer pipes, but they do not use micronized recycled PVC, having several drawbacks regarding the technical characteristics, the field of use, the weight, the consumption of materials and the bigger cost.

The technical problem solved by the invention is to produce a multilayer tube product in which the virgin PVC is completely substituted with the micronized recycled PVC in the middle expanded layer or the inner compact layer which provides technical and functional characteristics, improved processing, a reduction in the weight of pipes, a lower price due to lower raw material costs and a positive impact on the environment, by reintroducing the micronized recycled PVC into the composition, to make it suitable for use for which it is intended, respectively on a wide variety of applications.

Compared with D1 (KR 2017 0052263 A), D2 (JP 2010 274577 A), D3 (JP 2002 283436 A), D4 (Petri Zosin Sergiu ET AL, XP055869880) D5 (KR 101 381 310 B1) the application presents the following inventive steps:
From the specialty literature we know that PVC waste is hard to reprocess because of the fact that it comes from different fields of application with different compositions and it's important for the environment to reuse them in usual applications.

The recycled PVC can be reprocessed in different forms: grounded, granulated and micronized.

According to the proposed invention the recycled PVC that comes from rigid applications (Shore D hardness 70° - 95° ShD) is micronized (35-1250 microns) and gets mixed with different components in different proportions and it will get in the middle layer thus getting density value of 0.55 - 0.9 g/ccm.

The difference between D1, D2, D3, D4, D5 and our claims are in the chosen compositions, field of use, physico-mechanical properties and the source of the recycled material.

### Disclosure of the Invention

The invention is defined by the features of claim 1.

The solution for the technical problem solved by the invention is the achievement of micronized recycled PVC multilayer pipes having three layers, two of which are densely compact, one being placed inside and the other at the external side of the pipe, and between them being placed a middle layer with smaller density, being expanded and having a micronized recycled PVC composition.

These pipes are obtained by a process consisting of several phases, operations, installations, manufacturing compositions with different compositions, for the compact layer and the expanded layer, using recycled PVC and addition of expanding agent.

The invention overcomes the above disadvantages in that the recycling of PVC under this micronized form of various applications is a modern and efficient solution, it contributes to the decrease of the production of virgin raw material by its complete substitution, with a major impact on the environment.

Additions of materials in the virgin or micronized recycled PVC materials are used to provide thermal stability of virgin or recycled PVC, better processing, improved physical-mechanical properties, and lower cost.

The advantages of applying the invention consists in that a solution has been found to solve some of the problems presented, by introducing the multilayer polyvinyl chloride PVC pipes which provide improved technical and functional characteristics, better machining, reduced weight of pipes, a lower price as a result of lower raw material costs and a positive environmental impact, making it suitable for its intended use on a wider range of applications.

The invention presents a technical solution for obtaining micronized recycled PVC multilayer pipes and a process for obtaining them. The invention consists in replacing virgin PVC in the composition of the expanded layer with micronized recycled PVC and expanding this mixture to density values between 0.55-0.9 g / cm³ (depending on the physical and mechanical properties desired to be obtained). A composition consisting of a mixture of components is used so that at the processing temperatures it is possible to incorporate a quantity of expanding agent so that the expansion of the middle layer occurs between the indicated values.

Another solution is to replace the PVC in the inner compact layer with micronized recycled PVC. The density of the inner compact layer in this case is between 1.45-1.9 g / cm³.

Recycled PVC multilayer pipes according to the invention consist of 3 layers, 2 of which are densely compact, one being placed inside and the other at the external side of the pipe, and between them being placed a middle layer with smaller density, being expanded and having a micronized recycled PVC composition, to which is added a blowing agent - **fig . 1.1** and **1.2** These are obtained by the extrusion process using fabrication recipes with different compositions, a composition being for the compact layer and the other being for the expanded layer. These additions in PVC mass are required to provide thermal stability of PVC at processing temperatures for better machining and to have a lower cost.

In the composition of the inner and outer layers, it is used as base raw material a PVC type with certain characteristics, according to the standards, for example but not limited to PVC K 67, and in the middle layer of expanded layer, the base raw material is a PVC type with other characteristics, also according to standards, for example but not limited to PVC K 58, to which is added swelling agent.

As a result of the tests, the multilayer pipes with the middle layer made by the combination of micronized recycled PVC and a swelling agent are proved to be superior in terms of technical and economic characteristics, compared with the pipes in which the micronized recycled PVC is not used.

The compositions are made by means of metering-mixing devices of the components, the metered mixture of the quantities being introduced into the mixer and mixed up to a temperature of 110-130°C, then being cooled to a temperature of 40-50°C in a cooler.

The storage of the mixtures is done in bunkers, each with its composition and from here is fed to the production lines.

A PVC multilayer extrusion line is usually made up of an extruder and co-extruder, a mold, calibration-cooling valves, tracer, circular cutter and dowel.

The extruder is used to extrude the middle expanded layer and the co-extruder to extrude the two compact layers, respectively the inner and outer layers.

Typically, the density of the compact layer is around 1.46-1.6 g / cm³ and for the expanded layer the density is between 0.85-1.35 g / cm³.

The classification of these pipes is based on the value of the flow, which is established taking into account the dimensions of the outer diameter of the pipe and the annular stiffness which is established taking into account the thickness of the walls.

### For pipes used in sewage systems, both indoors and outdoors the buildings, some values are used that meet the industry standards, namely:

- at external diameter there are values in the range 110 - 500 mm, with a tolerance between 0.3-0.9 mm
- for the stiffness class SN 2, SDR 51, the wall thickness is between 2.2-9.8 mm with a tolerance between 0.5-1 mm
- for stiffness class SN 4, SDR 41, the wall thickness is between 3.2-12.3 mm with a tolerance between 0.6-1 mm
- for the stiffness class SN 8, SDR 34, the wall thickness is between 3.2-14.6 mm with a tolerance between 0.4-1.4 mm
- for stiffness class SN 12, SDR 30, the wall thickness is between 10.3-16.5 mm with a tolerance between 1.2-1.7 mm

### The raw materials used to obtain multilayer pipes are:

- PVC K 64-68 - is the basic raw material recommended for use in the compact layer of PVC multilayer pipes
- PVC K 58 - is the basic raw material recommended for use in the expanded layer of PVC multilayer pipes
- Calcium carbonate - is used as filler, helping to increase rigidity, the average particle size (D50) of calcium carbonate being between 2-5 µm.
- Complex Ca-Zn stabilizer - is added to increase the thermal stability of PVC because its processing temperature coincides with the thermal decomposition temperature. It may be in the form of powder, flakes, microgranules or tablets.
- Synthetic paraffin - is a white powder with a melting point of 108 ° C used as internal lubricant to reduce internal friction between particles.
- Polyethylene wax - is a white powder used as an external lubricant to reduce the frictions that occur between the polymer mass and the plasticizing units.
- High density homopolymer polyethylene oxide - is a lubricant used in fine powder form, having a melting temperature of 140 ° C, used to control gelling of the mixture.
- Processing Modifier - has the role of increasing pipe flexibility and dispersion of calcium carbonate and blowing agent in the mass of the mixture, the relative viscosity of the processing modifier being between 10-16 ml / g.
- Azodicarbonamide - is an expanding agent used to reduce the density of the expanded layer. It can be in the form of powder or microgranules, and can be introduced directly into the extruder or in the mixer (pulverulent form).
- Micronized Recycled PVC - is used as the base raw material, replaces virgin PVC K 58 in the expanded layer or virgin PVC K 64-68 from the compact inner layer. It can come from post-consumer or post-industrial waste (PVC pipes and pipes, PVC fittings, PVC joinery profiles, PVC profiles for building, PVC ducts and other technical profiles based on rigid PVC).

### The characteristics of the raw material used to obtain multilayer pipes are as follows:

- Use a micronized recycled PVC that does not have plasticizers.
- The Shore D hardness for micronized recycled PVC ranges between 70-85°Sh D and is determined according to ISO 868.
- K-value of PVC in micronized recycled PVC ranges between 60.5-68 and is determined according to SR EN ISO 13229 and SR EN ISO 1628-2. The K value is a calculation formula based on the flow index of the polymer extracted from the mixture and empirically expresses the length of the PVC molecular chain. The lower the K value is, the easier processing is, but some properties such as stiffness decrease.
- The ash content of the micronized recycled PVC should be between 5-45% and is calculated according to SR EN ISO 3451-1.
- Particle size is very important, so for pipes with diameters between 110-200 mm is used micronized recycled PVC with a maximum particle size of 600 µm and for pipes with diameters between 250-500 mm a micronized recycled PVC can be used particle with a maximum size of 1250 µm.
- Particle sizes for micronized recycled PVC should be between 35-1250 µm determined according to SR EN 15346-2015.

### Brief Description of Drawings

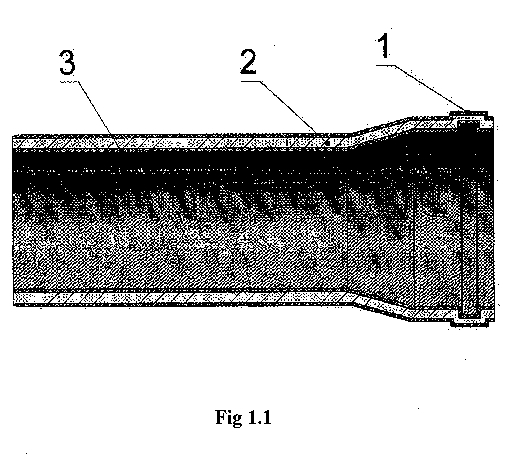

Embodiments of the invention will now be described with reference to Figure 1.1 which is a longitudinal sectional view and Figure 1.2 which is a cross-sectional view of a micronized recycled PVC multilayer pipe.

### Best Mode for Carrying Out the Invention

### Layer compositions that make up multilayer pipes are as follows:

For the expanded micronised recycled PVC layer, the components are used in the following proportions: micronized recycled PVC with values between 65.8% and 88.4%; Calcium carbonate with values between 4.5% and 21.8%; Thermal stabilizer based on Ca-Zn with values between 2.2% and 3.3%; Processing modifier with values between 4.4% and 6.6%;
Azodicarbonamide with values between 0.2% and 0.4%; Synthetic paraffin with values between 0.1% and 0.7%; High density polyethylene homopolymer oxide with values between 0.1 and 0.7%; Polyethylene wax with values between 0.1% and 0.7%.

For the compact outer layer with virgin PVC K 64-68 the components are used in the following proportions: PVC K 64-68 with values between 56% and 86.9%; Calcium carbonate with values between 8.6% and 37.3%; Ca-Zn thermal stabilizer with values between 2.6% and 2.8%; Synthetic paraffin with values between 0.2% and 0.6%; Polyethylene waxes ranging between 0.2% and 0.6%; Processing modifier with values between 0.6% and 1.6%; Dye with values between 0.9% and 1.1%.

For the compact inner layer with micronized recycled PVC, the components are used in the following proportions: micronized recycled PVC with values between 56% and 86.9%; Calcium carbonate with values between 8.6% and 37.3%; Ca-Zn thermal stabilizer with values between 2.6% and 2.8%; Synthetic paraffin with values between 0.2% and 0.6%; Polyethylene waxes ranging between 0.2% and 0.6%; Processing modifier with values between 0.6% and 1.6%; Dye with values between 0.9% and 1.1%.

### Obtaining mixtures that make up multilayer pipes:

The raw materials used in a manufacturing recipe must be homogeneously mixed to be processed. In order to obtain the mixtures that make up the three types of layers, namely the compact layer with virgin PVC or micronized recycled PVC and the expanded layer with micronized recycled PVC, automatic metering-mixing systems are used.

The components used are stored in the bunkers, automatically dosed in proportions established by manufacturing prescriptions and discharged into the mixer. The mixing temperature used is 110-130 ° C, the mixture after mixing is cooled in a cooler at 40-50 ° C, then transported and stored in the bunker.

Usually a dosing-mixing plant is equipped with two mixing lines, a line for making the compact layer recipe and the second line for making the expanded layer recipe.

The blowing agent used is azodicarbonamide and is applied either directly to the extrusion line, avoiding possible separation by transport or dosing in the mixer (especially the pulverulent form).

### Obtained polystyrene multi-layer pipes with micronized recycled PVC through the extrusion process.

Extrusion is the process of plastic processing by deformation consisting of the forced passage of the material through a mold, calibration-cooling valve, puller, circular cutter and dowelling valve.

### An embodiment of the invention

For the production of multilayer pipes, extrusion lines are used, consisting of a double screw extruder, the raw material used being the expanded dry-blend and the double-sided coextruder, the raw material being compact dry-blend.

The mixed dry-blend is conveyed from the storage bunker into the extruder or coextruder filter by means of a feed system. After separation, the material is gravitationally discharged into the feed funnel. Material dosing takes place followed by its plasticized and homogenized at the prescribed temperature in the plasticizing units. The blowing agent is introduced in the extruder, using a metering unit.

The plasticized materials are putted together in the mold, the layers are formed, the desired shape is obtained by using a dowel and a suitable die extruded pipe.

The final shape of the pipe is obtained in the calibrator by vacuum and cooling. There is a further cooling of the product followed by a specific marking to each type of pipe.

The extruder and the coextruder are synchronized with a puller, which is designed to create a continuous extrusion stream and to control the wall thickness of the pipe.

The circular cutter achieves the debit of the pipe to the desired length and the chamfering at one of the pipe end and at the other end the pipe fitting is made.

Multilayer pipes of the size between 110-500 mm are extruded on an extruder and coextruder with the L / D ratio (where L = plasticizer length and D = plasticizer unit diameter) between 24-32 using a mold mandrel and the calibrated orifice for each diameter, the raw material being a compact layer with virgin PVC K 64-68 and a micronized recycled PVC layer according to the above described compositions. The extrusion parameters are chosen according to the characteristics of the pipes matching to their specific use.

In order to obtain a uniform expansion, the processing temperatures on the first three zones of the extruder must be between 190-235°C relative to the usual temperatures of 140-175°C used in the case of expanding of virgin PVC K 58.

### Another embodiment of the invention

Another possibility to obtain these multilayer pipes is by using an extrusion line consisting of 2 coextruders and an extruder. The first coextruded brings in the mold the outer compact layer in which the basic raw material is virgin PVC K 64-68, according to the composition described above, the second coextruder bringing in the inner compact layer from micronized recycled PVC as described above and the extruder will introduces the expanded layer with micronized recycled PVC. This is possible by redesigning the distribution plate of the compact layers from the mold. Using the same described process, the changes will be only as appearance as the inner compact layer will have a different colour compared with the outer compact layer.

The present invention can be achieved in other ways than those presented here specifically, without departing from the essential features of the invention and the embodiments are to be considered as illustrative and not restrictive, so that all the differences that are in the range of meaning of the claims, are intended to be incorporated therein. The layers that make up the multilayer pipes may have the same thicknesses or different thicknesses depending on the conditions to be met for their specific use.

### From technical data, specific calculation formulas and tests resulted in the following:

In order to process the micronized recycled PVC in this application, a chemical composition is required to reduce viscosity and increase thermal stability.

The working temperatures in the first three zones of the extruder barrel must be between 190-235 ° C to achieve plasticization of the material with a predetermined quantity of modifier and to allow the incorporation of a larger amount of blowing agent required to lower the density.

Granulometry of micronized recycled PVC is also important, indicating the scope of use in the described applications.

Plasticizing units of extruders must be exchanged with more resistant units (such this having treatment with tungsten carbide) to mechanical and chemical aggressions, to decrease wear and increase the life of these spare components.

Cost reductions are significant and vary depending on diameters and stiffness classes.

The recycling of PVC having this micronized content from various applications is a modern and efficient solution, helping to reduce the production of virgin raw materials, with a major impact on the environment.

## Claims

1. Multilayer PVC pipe with a layer made from micronized recycled PVC wherein the pipe is formed from three layers (1,2,3),
the pipe being **characterized in that**
the middle layer (2) is expanded with a smaller density and has components in the following proportions:
micronized recycled PVC with values between 65.8% - 88.4%, and
calcium carbonate with values between 4.5% - 21.8%, and
thermal stabilizer based on Ca-Zn with values between 2.2% - 3.3%, and
processing modifier with values between 4.4% - 6.6%, and
azodicarbonamide with values between 0.2% - 0.4%, and
synthetic paraffin with values between 0.1% - 0.7%, and
high density polyethylene homopolymer oxide with values between 0.1% - 0.7%, and
polyethylene wax with values between 0.1% - 0.7%, for the compact outer layer (1)
with virgin PVC K 64-68 the components are used in the following proportions:
PVC K 64-68 with values between 56% and 86.9%:
Calcium carbonate with values between 8.6% and 37.3%;
Ca-Zn thermal stabilizer with values between 2.6% and 2.8%;
Synthetic paraffin with values between 0.2% and 0.6%;
Polyethylene waxes ranging between 0.2% and 0.6%;
Processing modifier with values between 0.6% and 1.6%;
Dye with values between 0.9% and 1.1%, and for the compact inner layer (3)
with micronized PVC, the components are used in the following proportions:
Micronized recycled PVC with values between 56% and 86.9%:
Calcium carbonate with values between 8.6% and 37.3%;
Ca-Zn thermal stabilizer with values between 2.6% and 2.8%;
Synthetic paraffin with values between 0.2% and 0.6%;
Polyethylene waxes ranging between 0.2% and 0.6%;
Processing modifier with values between 0.6% and 1.6%;
Dye with values between 0.9% and 1.1%.

## Patentansprüche

1. Mehrschichtiger PVC-Rohr mit einer Schicht aus recyceltem mikronisiertem PVC, wobei der Rohr aus drei Schichten besteht, die **dadurch gekennzeichnet sind, dass** die mittlere Schicht mit einer geringeren Dichte expandiert ist und Komponenten in den folgenden Anteilen aufweist:
• Mikronisiertes recyceltes PVC mit Werten zwischen 65,8 % - 88,4 % und
• Calciumcarbonat mit Werten zwischen 4,5 % - 21,8 % und
• Thermostabilisator auf Ca-Zn-Basis mit Werten zwischen 2,2 %-3,3 % und
• Verarbeitungsmodifikator mit Werten zwischen 4,4 %-6,6 % und
• Azodicarbonamid mit Werten zwischen 0,2 %-0,4 % und
• Synthetisches Paraffin mit Werten zwischen 0,1 %-0,7 % und
• Polyethylenoxid-Homopolymer hoher Dichte mit Werten zwischen 0,1 % -0,7 % und
• Polyethylenwachs mit Werten zwischen 0,1 %-0,7 % für die kompakte Außenschicht
Bei Neu-PVC K 64-68 werden die Komponenten in folgenden Anteilen eingesetzt:
• PVC K 64-68 mit Werten zwischen 56 % und 86,9 %
• Calciumcarbonat mit Werten zwischen 8,6 % und 37,3 %
• Ca-Zn Thermostabilisator mit Werten zwischen 2,6 % und 2,8 %
• Synthetisches Paraffin mit Werten zwischen 0,2 % und 0,6 %
• Polyethylenwachs zwischen 0,2 % und 0,6 %
• Verarbeitungsmodifikator mit Werten zwischen 0,6 % und 1,6 %
• Farbstoff mit Werten zwischen 0,9 % und 1,1 %
Und für die kompakte Innenschicht mit mikronisiertem PVC werden die Komponenten in den folgenden Anteilen verwendet:
• Mikronisiertes recyceltes PVC mit Werten zwischen 56 % und 86,9 %
• Calciumcarbonat mit Werten zwischen 8,6 % und 37,3 %
• Ca-Zn Thermostabilisator mit Werten zwischen 2,6 % und 2,8 %
• Synthetisches Paraffin mit Werten zwischen 0,2 % und 0,6 %
• Polyethylenwachs zwischen 0,2 % und 0,6 %
• Verarbeitungsmodifikator mit Werten zwischen 0,6 % und 1,6 %
• Farbstoff mit Werten zwischen 0,9 % und 1,1 %

## Revendications

1. Tube en PVC multicouche avec une couche en PVC recyclé micronisé, le tube étant constitué de trois couches, **caractérisé par le fait que** la couche médiane est expansée avec une densité plus faible et a des composants dans les proportions suivantes :
• PVC recyclé micronisé avec des valeurs comprises entre 65,8 % - 88,4 % et
• Carbonate de calcium avec des valeurs comprises entre 4,5 % et 21,8 %, et
• Stabilisateur thermique à base de Ca-Zn avec des valeurs comprises entre 2,2 % et 3,3 % et
• Modificateur de traitement avec des valeurs comprises entre 4,4 % et 6,6 %, et
• Azodicarbonamide avec des valeurs comprises entre 0,2 % et 0,4 %, et
• Paraffine synthétique avec des valeurs comprises entre 0,1 % et 0,7 %, et
• Oxyde de polyéthylène homopolymère haute densité avec des valeurs comprises entre 0,1 % et 0,7 % et
• Cire de polyéthylène avec des valeurs comprises entre 0,1 % et 0,7 % pour la couche externe compacte
Avec le PVC vierge K 64-68, les composants sont utilisés dans les proportions suivantes :
• PVC K 64-68 avec des valeurs entre 56% et 86,9%
• Carbonate de calcium avec des valeurs comprises entre 8,6 % et 37,3 %
• Stabilisateur thermique Ca-Zn avec des valeurs comprises entre 2,6% et 2,8%
• Paraffine synthétique avec des valeurs comprises entre 0,2 % et 0,6 %
• Cire de polyéthylène comprise entre 0,2 % et 0,6 %
• Modificateur de traitement avec des valeurs comprises entre 0,6 % et 1,6 %
• Colorant avec des valeurs comprises entre 0,9 % et 1,1 %
Et pour la couche intérieure compacte en PVC micronisé, les composants sont utilisés dans les proportions suivantes :
• PVC recyclé micronisé avec des valeurs entre 56% et 86,9%
• Carbonate de calcium avec des valeurs comprises entre 8,6 % et 37,3 %
• Stabilisateur thermique Ca-Zn avec des valeurs comprises entre 2,6% et 2,8%
• Paraffine synthétique avec des valeurs comprises entre 0,2 % et 0,6 %
• Cire de polyéthylène comprise entre 0,2 % et 0,6 %
• Modificateur de traitement avec des valeurs comprises entre 0,6 % et 1,6 %
• Colorant avec des valeurs comprises entre 0,9 % et 1,1 %
